# EUROPEAN PATENT SPECIFICATION

(11) **EP 2 221 199 B1**
(45) Date of publication and mention of the grant of the patent: **29.02.2012**
(21) Application number: 08859718.2
(22) Date of filing: 17.11.2008
(51) Int. Cl.: B60H 1/22

(54) **VEHICLE HEATING SYSTEM**
KRAFTFAHRZEUGHEIZSYSTEM
SYSTEME DE CHAUFFAGE DE VEHICULE

(30) Priority: 13.12.2007 JP 2007321844; 20.12.2007 JP 2007328357
(43) Date of publication of application: 25.08.2010
(73) Proprietor: Panasonic Corporation, Kadoma-shi Osaka 571-8501 (JP)
(72) Inventor: HIOKI, Kazuaki, Osaka-shi, Osaka 540-6207 (JP); YOSHIMOTO, Koji, Osaka-shi, Osaka 540-6207 (JP); ASAMI, Naohito, Osaka-shi, Osaka 540-6207 (JP); ABE, Norio, Osaka-shi, Osaka 540-6207 (JP); ARIMA, Satoshi, Osaka-shi, Osaka 540-6207 (JP); KONISHI, Hideaki, Osaka-shi, Osaka 540-6207 (JP); OGINO, Hiroyuki, Osaka-shi, Osaka 540-6207 (JP); KONDOU, Ryuta, Osaka-shi, Osaka 540-6207 (JP)
(74) Representative: Schwabe - Sandmair - Marx
(86) International application number: PCT/JP2008/003350
(87) International publication number: WO 2009/075063

(56) References cited:
- EP-A1- 1 354 734
- DE-A1- 3 342 107
- DE-A1- 4 332 578
- JP-A- 4 043 116
- JP-A- 2005 212 556
- JP-A- 2006 224 813
- JP-U- 2 054 620

## Description

### Technical Field

The present invention relates to a vehicle heating system.

### Background Art

Conventionally, as a vehicle heating system of this type, a sheet-like electric heater is disposed along a surface of an interior member within a passenger compartment, and a thermal radiation member which is made of a material having a high thermal emissivity is disposed on a surface of the electric heater. Then, the thermal radiation member is heated by heat generated by the electric heater, so that infrared rays are radiated from a surface of the thermal radiation member. The interior member is at least one of a lower portion of a vehicle instrument panel situated at a front portion of the passenger compartment, lower portions of internal sides of left and right side doors which lie in the passenger compartment, left and right side portions of a center console in the passenger compartment, and a back portion of a front seat member (refer to Patent Document 1, for example).

In the related art described above, however, since infrared rays radiated from the surface of the thermal radiation member when it is heated are emitted only to the feet to trunk of an occupant, there has been a problem that the occupant feels cold at his or her bodily portions from the head to shoulders and the arms while driving the vehicle. In addition, the related art also has a problem that each of these bodily portions cannot be warmed sufficiently due to the limited electric capacity of the vehicle.

Patent Document 2 describes a reduced weight heating, ventilating, and cooling device. The device has a single liquid circuit for selectively heating or cooling the vehicle chamber and controlled valves to regulate the quantity of heat requested for the loads. An, electrically controlled 3-way valve is arranged in the main forward line for the heat carrying medium only at the point at which the medium cooled by an air conditioning box enters the line. Quantity regulating valves are provided to distribute the requested heat to loads. The device has a single liquid circuit for selectively heating or cooling the vehicle chamber and regulating valves controlled by a controller to regulate the quantity of heat requested for the loads. An electrically controlled 3-way valve is arranged in the main forward line for the heat carrying medium only at the point at which the medium cooled by an air conditioning box enters the line. Quantity regulating valves are provided to distribute the requested heat to loads.
Patent Document 1: JP-A-2005-212556
Patent Document 2: EP 1 354 734 A1

### SUMMARY OF THE INVENTION

It is an object of the present invention to provide a vehicle heating system which can warm the bodily portions from the head to shoulders of the occupant and the arms thereof while driving the vehicle in order to obtain comfortable heating effects even within the limited electric capacity of the vehicle.

The above-mentioned object is solved by the subject-matter of independent claim 1. The dependent claims are directed to advantageous embodiments.

### ADVANTAGES OF THE INVENTION

In a non claimed embodiment, vehicle heating system is provided in which a planar heating element is installed in an interior member inside a passenger compartment of a vehicle for heating the inside of the vehicle, and the planar heating element is installed above a side windowpane or in a center pillar.

According to the invention, vehicle heating system is provided in which a planar heating element is installed in an interior member inside a passenger compartment of a vehicle for heating the inside of the vehicle, the planar heating element is installed on a surface of a ceiling for heating an upper surface portion of the body of an occupant, and a heating density of one portion of the planar heating element which is situated directly above the head of the occupant is reduced, whereas a heating density of the other portion of the planar heating element which is situated further outwards than the portion lying directly above the head is increased.

In a non claimed embodiment, the planar heating element is installed above the side windowpane or in the center pillar to provide the means for warming the side portion of the body of the occupant so as to warm the occupant quickly, whereby there is provided an advantage that the heating effect is promoted.

According to the invention, the planar heating element is installed on the surface of the ceiling to provide the heating means for warming the upper surface portion of the body of the occupant for quick warming of the occupant, whereby in addition to the advantage of promoting the heating effect, there is provided an advantage that a comfortable heating effect can be obtained within the limited electric capacity by eliminating a sensation of uncomfortableness which would otherwise be felt by the occupant at his or her head due to radiation heat when an inside temperature of the passenger compartment is increased by reducing the heating density of the portion of the planar heating element which is situated directly above the head while increasing the heating density of the other portion of the planar heating element which is situated further outwards than the portion lying directly above the head.

### Brief Description of the Drawings

[Fig. 1] External views of vehicle heating systems according to first and second comparative examples.
[Fig. 2] An external view showing a case in which a planar heating element 2 and a planar heating element 3 are energized.
[Fig. 3] External views of vehicle heating systems according to first and second embodiments of the invention.
[Fig. 4] An external view showing a case in which a planar heating element 20 is energized.

1 side windowpane; 2 planar heating element; 3 planar heating element; 4 center pillar portion; 10 ceiling surface; 20 planar heating element; 21 planar heating element directly above the head; 22 planar heating element situated further outwards than a portion lying directly above the head

### Best Mode for Carrying out the Invention

According to a first non claimed example, there is provided a vehicle heating system for heating an inside of a vehicle by installing a planar heating element in an interior member inside a passenger compartment, whereby the planar heating element is installed above a side windowpane for warming a side portion of a body of an occupant.

According to a second non claimed example, there is provided a vehicle heating system for heating an inside of a vehicle by installing a planar heating element in an interior member inside a passenger compartment, whereby the planar heating element is installed in a center pillar for warming a side portion of a body of an occupant.

According to the invention, there is provided a vehicle heating system for heating an inside of a vehicle by installing a planar heating element on an interior member inside a passenger compartment, whereby the planar heating element is installed on a ceiling surface for warming an upper surface portion of a body of an occupant, and a heating density of a planar heating element which is situated directly above the head of the occupant is reduced while a heating density of a planar heating element which is situated further outwards than the planar heating element situated directly above the head of the occupant is increased.

According to a further embodiment, there is provided a vehicle heating system for heating an inside of a vehicle by installing a planar heating element on an interior member inside a passenger compartment, characterized in that the planar heating element is installed on a ceiling surface to provide a means for warming an upper surface portion of a body of an occupant for quick warming of the occupant to thereby provided an advantage of promoting heating effects, and in that the planar heating element is divided into at least two or more planar heating elements including a planar heating element which is situated directly above the head of the occupant and a planar heating element which is situated further outwards than the planar heating element situated directly above the head of the occupant so as to control the heating value of the planar heating element.

hereinafter, embodiments of the invention will be described by reference to the drawings. Note that the invention is not limited by these embodiments at all.

### Comparative Example

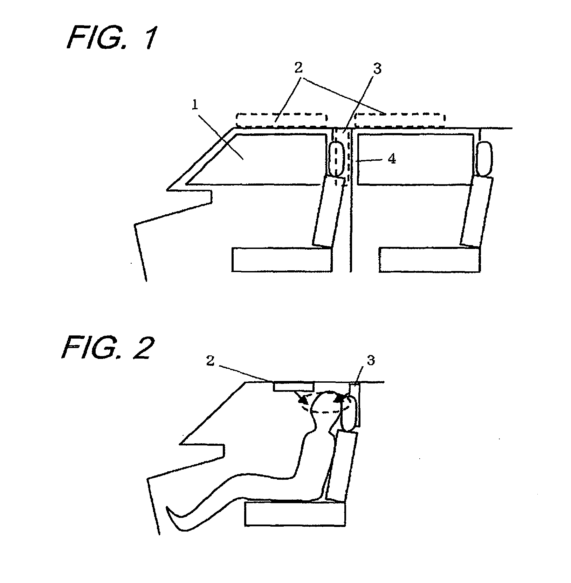

A first non claimed example of the invention will be described by reference to Figs. 1 and 2.

Fig. 1 is an external view of a vehicle heating system according to a first embodiment of the invention. In the figure, a planar heating element 2 is installed above a side windowpane 1. The planar heating element 2 is installed so that its heating surface confronts an upper body of an occupant who is seated in a seat which extends from the head to shoulder of the occupant.

By adopting the configuration described above, as is shown in Fig. 2, the upper body of the front-seat occupant can be warmed by radiation heat when the planar heating element 2 is energized. In particular, since the head is not covered with clothing to be exposed, the aforesaid radiation heating is effective in a severe winter time.

In addition, a configuration may be adopted in which the installation area of the planar heating element 2 is extended to cover an area ranging from a portion situated directly above the occupant to a portion situated above the side windowpane 1. According to this configuration, since radiation heat is emitted to a bodily portion of the occupant ranging from the whole of the head to the left and right shoulders by the planar heating element 2, the heating effect is increased further.

Additionally, a configuration may be adopted in which a planar heating element is installed above a side windowpane for a rear seat, thereby making it possible to warm an upper body of an occupant in the rear seat.

In addition, when an inside temperature of a passenger compartment is increased by heating, there may occur a case where the occupant feels it uncomfortable to be warmed at his or her head by radiation heat. Because of this, a configuration may be adopted in which the planar heating element 2 is energized intermittently or the energization time of the planar heating element 2 is controlled on a 1/f fluctuation basis. As this occurs, since radiation heat continues to be emitted by the thermal capacity of the planar heating element 2 and an interior member lying adjacent thereto even when the energization is switched off, there is no such situation that the occupant feels that a sensation of being warmed disappears momentarily the energization of the planar heating element 2 is switched off. Hence, the heating by the planar heating element 2 is allowed to continue by the intermittent energization while saving energy and comfortableness are kept compatible with each other. In addition, a configuration may be adopted in which a temperature sensor is installed inside the passenger compartment for energization control by controlling intervals at which energization is switched on and off in accordance with the temperature of the passenger compartment or controlling the amount of electric power to energize the planar heating element.

### Comparative Example

A second non claimed example of the Invention will be described by reference to Figs. 1, 2.

Fig. 1 is an external view of a vehicle heating system according to a second non claimed example. In the figure, a planar heating element 3 is installed in a center pillar portion 4. The planar heating element 3 is installed so that a heating surface thereof confronts an upper body of an occupant who is seated in a seat which extends from the head to shoulder of the occupant.

By adopting the configuration described above, as is shown in Fig. 2, the upper body of the front-seat occupant can be warmed by radiation heat when the planar heating element 3 is energized.

In addition, a configuration may be adopted in which a planar heating element is installed above a side windowpane for a rear seat, thereby making it possible to warm an upper body of an occupant in the rear seat.

Additionally, a configuration may be adopted in which planar heating elements are installed both above a side windowpane 1 and in the center pillar portion 4 so that the planar heating elements confront an upper body of an occupant which extends from the head to shoulder of the occupant, whereby the periphery of the upper body extending from the head to shoulder of the occupant can be warmed in an enclosing fashion.

In addition, while the first and second non claimed examples are configured so that the planar heating elements are installed above the side windowpane 1 and in the center pillar portion 4, a configuration may be adopted in which another planar heating element is installed in at least one of locations within the passenger compartment including a lower portion of a vehicle instrument panel situated at a front portion of the passenger compartment, lower portions of internal sides of left and right side doors which lie in the passenger compartment, left and right side portions of a center console in the passenger compartment, and a back portion of a front seat member for warming the whole body of the occupant from his or her head to feet by radiation heat emitted from those planar heating elements, whereby the sensation of being warmed is increased further.

In addition, a configuration may be adopted in which those planar heating elements are controlled individually to be energized or are energized sequentially and alternately in a circular fashion at regular time intervals, whereby the heating by the planar heating elements is enabled while saving energy and comfortableness are kept compatible with each other. In addition, a configuration may be adopted in which the planar heating elements are controlled to be energized step by step until the temperature inside the passenger compartment gets stable from the start of heating. For example, planar heating elements are installed above a side windowpane 1 and left and right side portions of a center console in the passenger compartment, and the planar heating elements at both the locations are energized for a certain length of time after the start of heating, and thereafter, the planar heating elements at both the locations are alternately energized for a certain length of time. By adopting this configuration, at the start of heating, the occupant is quickly warmed over the whole body by radiation heat emitted from the planar heating elements at both the locations, and once the temperature of the passenger compartment is increased, the planar heating elements at both the locations are energized alternately for a certain length of time, thereby making it possible to maintain the sensation of being warmed at a constant level.

Additionally, a configuration may be adopted in which heating is implemented through a combination of an onboard air conditioner and a planar heating element. As this occurs, for a certain length of time after the start of heating, mainly the feet of the occupant are warmed by hot air from the car air conditioner while an upper body of the occupant extending from his or her head to shoulders is warmed by radiation heat emitted from the planar heating element 2 or 3. Once the temperature of the passenger compartment is increased, the energization of the planar heating element is switched off or the planar heating element is controlled to be energized intermittently, thereby making it possible to maintain the sensation of being warmed at a constant level.

In addition, any of configurations may be adopted in which the planar heating element is installed for only a front seat, in which the planar heating element is installed for only a rear seat, and in which the planar heating element is installed for both the front seat and the rear seat.

Additionally, a configuration may be adopted in which the planar heating element installed above the side windowpane is combined with the planar heating element installed on the ceiling for integration.

In addition, as to the planar heating element above the side windowpane and the planar heating element in the center pillar portion, their heating values are varied depending upon locations. For example, in the case of the planar heating element above the side windowpane, a method can be used in which the heating value is made larger on a side lying close to the side windowpane and is made smaller on a side lying far therefrom for efficient heating.

Additionally, the planar heating element that is installed in the center pillar portion may be installed in a location of a cover under which a seatbelt is accommodated.

### (Embodiment 1)

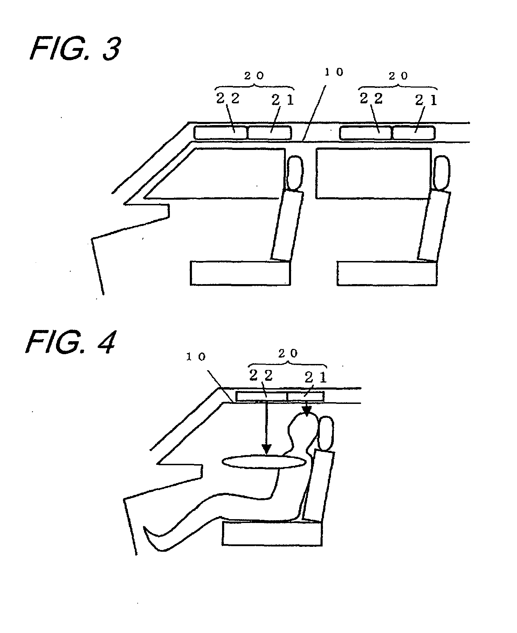

A first embodiment of the invention will be described by reference to Figs. 3, 4.

Fig. 3 is an external view of a vehicle heating system according to a first embodiment of the invention. In the figure, a planar heating element 20 is installed on a ceiling surface 10. The planar heating element 20 is installed so that a heating surface thereof confronts a bodily portion of an occupant who is seated in a seat which extends from his or her head to arms stretched during driving the vehicle via shoulders.

By adopting the configuration described above, as is shown in Fig. 4, a bodily portion of a front-seat occupant which extends from his or her head to shoulders and arms stretched for driving the vehicle can be warmed by radiation heat when the planar heating element 20 is energized. In particular, since the head is not covered with clothing to be exposed, the aforesaid radiation heating is effective in a severe winter time.

In addition, since the occupant feels uncomfortable at his or her head which is warmed by radiation heat as the temperature in a passenger compartment is increased, the heating density of a planar heating element 21 which is situated at a portion lying directly above the head is reduced while the heating density of a planar heating element 22 which is situated further outwards than the portion lying directly above the head is increased.

Additionally, since almost no sensation of being warmed can be obtained even in the event that the planar heating element 20 is installed on the ceiling surface lying at the rear of the head, a comfortable heading effect can be obtained even within the limited electric capacity by not installing the planar heating element 20 at a portion lying further rearwards than the portion on the ceiling surface which lies directly above the head.

In addition, by the heating density of the planar heating element 20 being made to be reduced on the basis of a distance from the body of the occupant in such a way that the heating density is reduced further as the distance gets shorter, a comfortable heading effect can be obtained even within the limited electric capacity.

Additionally, a configuration can be adopted in which by installing a temperature sensor inside the passenger compartment, the energization of the planar heating element is controlled in such a way that intervals at which the planar heating element is switched on and off is controlled or the amount of electric power for energization is controlled in accordance with the temperature inside the passenger compartment. Since the sensation of comfortableness or uncomfortableness is varied largely by the temperature inside the passenger compartment, the aforesaid energization control becomes effective particularly at the portion directly above the head.

Note that when the planar heating element 20 is energized intermittently, since radiation heat continues to be emitted by the heat capacity of the planar heating element 20 or an interior member in contact with the planar heating element 20 even though the energization of the planar heating element 20 is switched off, there is no such situation that the sensation of being warmed is eliminated momentarily, and hence, the heating by the planar heating element 20 can be implemented while saving energy and comfortableness are kept compatible with each other through intermittent energization.

In addition, a configuration may be adopted in which the planar heating element 20 is installed on a ceiling surface above a rear seat for warming a bodily portion of a rear-seat occupant which extends his or her head to shoulder.

### (Embodiment 2)

A second embodiment of the invention will be described by reference to Figs. 3, 4.

Fig. 3 is an external view of a vehicle heating system according to a second embodiment of the invention. In the figure, a planar heating element 20 is installed on a ceiling surface 10. The planar heating element 20 is installed so as to be divided into at least two or more planar heating elements including a planar heating element 21 whose heating surface is placed at a portion lying directly above the head of an occupant who is seated in a seat and a planar heating element 22 which is placed on an outer side of the portion lying directly above the head of the occupant.

By adopting the configuration described above, as is shown in Fig. 4, when the planar heating element 20 is energized, a bodily portion of the front-seat occupant which extends from his or her head to arms stretched for driving the vehicle via shoulders can be warmed by radiation heat. Since the head, in particular, is not covered with closing but is exposed, the radiation heating described above becomes effective in a sever winter time.

In addition, at the start of heating, the heating values of both the planar heating element 21 situated at the portion lying directly above the head of the occupant and the planar heating element 22 situated further outwards than the portion lying directly above the head of the occupant are controlled to be increased for quick worming the bodily portion of the occupant.
Since the occupant feels uncomfortable at his or her head which is warmed by radiation heat as the temperature inside the passenger compartment is increased by the heating by both the planar heating elements, the heating value of the planar heating element 21 at the portion lying directly above the head of the occupant can be controlled to be reduced. Of course, the heating value of the planar heating element 22 situated at the portion lying further outwards than the portion lying directly above the head of the occupant can also be controlled to be reduced. However, the heating value of at least the planar heating element 21 situated at the portion lying directly above the head of the occupant is controlled to be 0 when the temperature inside the passenger compartment reaches 25°C, so that the occupant does not have to feel uncomfortable at his or her head which is warmed by radiation heat and a comfortable heating effect can be obtained even in the event that the electric capacity is limited.

In addition, in the first and second embodiments, while the planar heating element 20 is configured so as to be installed on the ceiling surface 10, for example, a configuration may be adopted in which another planar heating element is installed in at least one of locations within the passenger compartment including a lower portion of a vehicle instrument panel situated at a front portion of the passenger compartment, lower portions of internal sides of left and right side doors which lie in the passenger compartment, left and right side portions of a center console in the passenger compartment, and a back portion of a front seat member for warming the whole body of the occupant from his or her head to feet by radiation heat emitted from those planar heating elements, whereby the sensation of being warmed is increased further.

In addition, a configuration may be adopted in which those planar heating elements are controlled individually to be energized or are energized sequentially and alternately in a circular fashion at regular time intervals, whereby the heating by the planar heating elements is enabled while saving energy and comfortableness are kept compatible with each other. In addition, a configuration may be adopted in which the planar heating elements are controlled to be energized step by step until the temperature inside the passenger compartment gets stable from the start of heating. For example, a configuration is adopted in which all the planar heating elements are energized for a certain length of time after the start of heating, and thereafter, the individual planar heating elements are energized alternately for a certain length of time. By adopting this configuration, at the start of heating, the occupant is quickly warmed over the whole body by radiation heat emitted from all the planar heating elements, and once the temperature of the passenger compartment is increased, the individual planar heating elements are energized alternately for a certain length of time, thereby making it possible to maintain the sensation of being warmed at a constant level.

Additionally, a configuration may be adopted in which heating is implemented through a combination of an onboard air conditioner and a planar heating element. As this occurs, for a certain length of time after the start of heating, mainly the feet of the occupant are warmed by hot air from the car air conditioner while an upper body of the occupant extending from his or her head to shoulders and arms stretched for driving the vehicle is warmed by radiation heat emitted from the planar heating element. Once the temperature of the passenger compartment is increased, the energization of the planar heating element is switched off or the planar heating element is controlled to be energized intermittently, thereby making it possible to maintain the sensation of being warmed at a constant level.

In addition, any of configurations may be adopted in which the planar heating element is installed for only a front seat, in which the planar heating element is installed for only a rear seat, and in which the planar heating element is installed for both the front seat and the rear seat.

Additionally, in the planar heating element on the ceiling surface, the heating value is varied depending upon locations. For example, a method can be used in which the heating value is made larger on a side lying close to the side windowpane and is made smaller on a side lying far therefrom for efficient heating.

Thus, while the various embodiments of the invention have been described heretofore, the invention is not limited to the matters described in the embodiments.

### Industrial Applicability

As has been described heretofore, the vehicle heating system according to the invention can be widely applied to various types of heating for various types of seats for aeroplanes, theaters and the like.

## Claims

1. A vehicle heating system heating an inside of a vehicle by installing a planar heating element (20; 21, 22) in an interior member inside a passenger compartment,
the planar heating element (20; 21, 22) is installed on a ceiling surface (10) for warming an upper surface portion of a body of an occupant; **characterized in that**:
a heating density of a planar heating element (20; 21) which is situated directly above the head of the occupant is reduced while a heating density of a planar heating element (20; 22) which is situated further outwards than the planar heating element (20; 21) situated directly above the head of the occupant is increased.

2. The vehicle heating system as claimed in claim 1, **characterized in that** the planar heating element (20; 21, 22) is divided into at least two or more planar heating elements (21, 22) including a planar heating element (21) which is situated directly above the head of the occupant and a planar heating element (22) which is situated further outwards than the planar heating element situated directly above the head of the occupant so as to control the heating value of the planar heating element.

3. The vehicle heating system as claimed in claim 1 or 2, **characterized in that** the planar heating element (20; 21, 22) is not installed at a portion lying further rearwards than the portion lying directly above the head of the occupant.

4. The vehicle heating system as claimed in any one of claims 1 to 3, **characterized in that** a heating density of the planar heating element (20; 21, 22) is made to be varied in accordance with a distance from the body of the occupant so that the heating density is lowered as the distance is shorter.

5. The vehicle heating system as claimed in any one of claims 1 to 4, **characterized in that** a heating density of the planar heating element (20; 21, 22) is made to be varied in accordance with the temperature of a passenger compartment so that the heating density is lowered as the temperature of the passenger compartment is increased.

6. The vehicle heating system as claimed in claim 5, **characterized in that** the heating value of the planar heating element (20; 21, 22) situated at the portion lying directly above the head of the occupant is controlled to be 0 at least when the temperature of the passenger compartment reaches 25°C.

## Patentansprüche

1. Fahrzeugheizsystem, welches einen Innenraum eines Fahrzeugs mittels Installieren eines planaren Heizelements (20; 21, 22) in ein Innenraummittel innerhalb eines Passagierabteils heizt,
wobei das planare Heizelement (20; 21, 22) auf einer Deckenoberfläche (10) zum Erwärmen eines oberen Oberflächenabschnittes eines Körpers eines Insassens installiert ist;
**dadurch gekennzeichnet, dass**
eine Heizdichte eines planaren Heizelements (20; 21), welches direkt über dem Kopf des Insassens angeordnet ist, verringert ist, während eine Heizdichte eines planaren Heizelements (20; 22), welches weiter auswärts als das direkt über dem Kopf des Insassens angeordnete planare Heizelement (20; 21) angeordnet ist, erhöht ist.

2. Fahrzeugheizsystem wie in Anspruch 1 beansprucht, **dadurch gekennzeichnet, dass** das planare Heizelement (20; 21, 22) in wenigstens zwei oder mehrere planare Heizelemente (21, 22) aufgeteilt ist, welche ein planares Heizelement (21), welches direkt über dem Kopf des Insassens angeordnet ist, und ein planares Heizelement (22), welches weiter auswärts als das direkt über dem Kopf des Insassens angeordnete planare Heizelement angeordnet ist, aufweisen, um den Heizwert des planaren Heizelements zu steuern.

3. Fahrzeugheizsystem wie in Anspruch 1 oder 2 beansprucht, **dadurch gekennzeichnet, dass** das planare Heizelement (20; 21, 22) nicht in einem Abschnitt installiert ist, der weiter hinten als der direkt über dem Kopf des Insassens liegende Abschnitt liegt.

4. Fahrzeugheizsystem wie in einem der Ansprüche 1 bis 3 beansprucht, **dadurch gekennzeichnet, dass** eine Heizdichte des planaren Heizelements (20; 21, 22) im Zusammenhang mit einer Distanz von dem Körper des Insassens so variierbar ist, dass die Heizdichte verringert wird, wenn die Distanz kürzer wird.

5. Fahrzeugheizsystem wie in einem der Ansprüche 1 bis 4 beansprucht, **dadurch gekennzeichnet, dass** eine Heizdichte des planaren Heizelements (20; 21, 22) im Zusammenhang mit der Temperatur eines Passagierabteils so variierbar ist, dass die Heizdichte verringert wird, wenn die Temperatur des Passagierabteils erhöht wird.

6. Fahrzeugheizsystem wie in Anspruch 5 beansprucht, **dadurch gekennzeichnet, dass** der Heizwert des planaren Heizelements (20; 21, 22), welches an dem direkt über dem Kopf des Insassens liegenden Abschnitt angeordnet ist, so angesteuert wird, dass er 0 ist, zumindest wenn die Temperatur des Passagierabteils 25°C erreicht.

## Revendications

1. Système de chauffage pour véhicule chauffant l'intérieur d'un véhicule en installant un élément de chauffage planaire (20 ; 21, 22) dans un élément interne à l'intérieur d'un habitacle,
l'élément de chauffage planaire (20 ; 21, 22) est installé sur une surface de plafond (10) pour chauffer une partie de surface supérieure du corps d'un occupant ; **caractérisé en ce que**
une densité de chauffage d'un élément de chauffage planaire (20 ; 21) qui est directement situé au-dessus de la tête de l'occupant est réduite tandis qu'une densité de chauffage d'un élément de chauffage planaire (20 ; 22) qui est situé plus vers l'extérieur que l'élément de chauffage planaire (20 ; 21) directement situé au-dessus de la tête de l'occupant est augmentée.

2. Système de chauffage pour véhicule tel que revendiqué dans la revendication 1, **caractérisé en ce que** l'élément de chauffage planaire (20 ; 21, 22) est divisé en au moins deux éléments de chauffage planaires (21, 22) ou plus comportant un élément de chauffage planaire (21) qui est directement situé au-dessus de la tête de l'occupant et un élément de chauffage planaire (22) qui est situé plus vers l'extérieur que l'élément de chauffage planaire directement situé au-dessus de la tête de l'occupant de sorte à réguler le degré de chauffage de l'élément de chauffage planaire.

3. Système de chauffage pour véhicule tel que revendiqué dans la revendication 1 ou 2, **caractérisé en ce que** l'élément de chauffage planaire (20 ; 21, 22) n'est pas installé à une partie se trouvant plus vers l'arrière que la partie se trouvant directement au-dessus de la tête de l'occupant.

4. Système de chauffage pour véhicule tel que revendiqué dans l'une quelconque des revendications 1 à 3, **caractérisé en ce qu'**une densité de chauffage de l'élément de chauffage planaire (20 ; 21, 22) est réglée de manière à varier conformément à une distance allant du corps de l'occupant de sorte que la densité de chauffage diminue à mesure que la distance est plus courte.

5. Système de chauffage pour véhicule tel que revendiqué dans l'une quelconque des revendications 1 à 4, **caractérisé en ce qu'**une densité de chauffage de l'élément de chauffage planaire (20 ; 21, 22) est réglée de manière à varier conformément à la température de l'habitacle de sorte que la densité de chauffage diminue à mesure que la distance est plus courte.

6. Système de chauffage pour véhicule tel que revendiqué dans la revendication 5, **caractérisé en ce que** la valeur de chauffage de l'élément de chauffage planaire (20 ; 21, 22) situé à la partie se trouvant directement au-dessus de la tête de l'occupant est régulée à 0 au moins lorsque la température de l'habitacle atteint 25°C.
